# EUROPEAN PATENT APPLICATION

(11) **EP 4 223 137 A1**
(43) Date of publication of application: **09.08.2023**
(21) Application number: 21873804.5
(22) Date of filing: 22.02.2021
(51) Int. Cl.: A23J 1/20, A23L 33/19, A23C 9/142

(54) **WHEY PROTEIN COMPOSITION, AND PREPARATION METHOD THEREFOR AND USE THEREOF**

(30) Priority: 29.09.2020 CN 202011068591
(71) Applicant: Inner Mongolia Yili Industrial Group Co., Ltd., Inner Mongolia 010000 (CN); Inner Mongolia Dairy Technology Research Institute Co., Ltd., Inner Mongolia 010110 (CN)
(72) Inventor: WESCOMBE, Philip Andrew, Hohhot, Inner Mongolia 010000 (CN); VASILJEVIC, Todor, Hohhot, Inner Mongolia 010000 (CN); ZHANG, Xingchang, Hohhot, Inner Mongolia 010000 (CN); WANG, Caiyun, Hohhot, Inner Mongolia 010000 (CN); SZETO, Ignatius Man-Yau, Hohhot, Inner Mongolia 010000 (CN); QU, Peng, Hohhot, Inner Mongolia 010000 (CN); LUO, Shubo, Hohhot, Inner Mongolia 010000 (CN); YUN, Zhanyou, Hohhot, Inner Mongolia 010000 (CN); FENG, Haotian, Hohhot, Inner Mongolia 010000 (CN)
(74) Representative: HGF
(86) International application number: PCT/CN2021/077196
(87) International publication number: WO 2022/068137

(57) **Abstract**

The present invention relates to the technical field of protein processing, and disclosed are a whey protein composition, and a preparation method therefor and the use thereof. The whey protein composition of the present invention comprises a whey protein and β-casein, wherein the mass ratio of the β-casein to the whey protein is not less than 4.5 : 95.5. The whey protein composition provided by the present invention is mainly composed of a novel whey protein ingredient, which has a slower digestion characteristic than other whey proteins currently on the market. The whey protein composition is a β-casein-riched whey protein concentrate to which micronized and complex natural polysaccharides can be added, and the function of delaying digestion to promote muscle synthesis and provide adequate nutrition can be achieved.

## Description

### CROSS REFERENCE TO RELATED APPLICATIONS

This application claims the priority of Chinese Patent Application No. 202011068591.8, filed with the China National Intellectual Property Administration on September 29, 2020, and titled with "WHEY PROTEIN COMPOSITION, AND PREPARATION METHOD THEREFOR AND USE THEREOF", which is hereby incorporated by reference in its entirety.

### FIELD

The present disclosure relates to the technical field of protein processing, and in particular to a whey protein composition and preparation method therefor and use thereof.

### BACKGROUND

Whey protein, known as the king of protein, is a protein extracted from milk. It has the characteristics of high nutritional value, easy digestion and absorption, and containing a variety of active ingredients. It is recognized as one of the high-quality protein supplements for the human body.

Among various proteins, whey protein has the highest nutritional value. Whey protein is a high-quality complete protein, and is also an animal protein. It contains 8 kinds of amino acids necessary for the human body in a reasonable ratio that is close to the proportion required by the human body. It is an indispensable essence substance for human life activities such as growth, development, and anti-aging. Moreover, whey protein is easy to be digested and absorbed, and many experimental studies have proved that taking whey protein concentrate can promote humoral immunity and cellular immunity, stimulate the human immune system, and prevent the occurrence of chemically induced cancer. In addition, whey protein is low in fat and lactose, but it contains β-lactoglobulin, α-lactalbumin, immunoglobulin, and many other active ingredients. It is these active ingredients that enable whey protein to have many health care functions beneficial to the human body. Therefore, it is considered to be one of the high-quality protein sources needed by the human body.

From a perspective of nutrition, foods derived from animal proteins contain substances harmful to the human body such as excess saturated fat and cholesterol, the excessive consumption of which can easily lead to the increase of body fat and cholesterol, thereby leading to the occurrence of cardiovascular diseases. These problems can be avoided by taking protein powder to supplement protein. In addition, protein powder is easy to be taken, has a high absorption utilization rate, and can reduce the burden on the stomach. Therefore, taking protein powder is the best choice for protein supplementation. Whey protein is the first consideration for people when choosing protein powder.

Since whey protein takes a short time from oral intake to digestion and absorption, and contains a large amount of branched chain amino acids, such as valine, leucine, and isoleucine, it is generally believed that it can prevent muscle fatigue and can be highly effective to strengthen muscles. However, if this release characteristic can be slowed down, it will be able to better promote positive muscle synthesis, so as to be widely used in many fields such as the prevention of muscle atrophy in the elderly, muscle repair and weight loss needs after people exercise, and growth and development of children.

The current status of sustained-release whey depends on the development of "micelle whey" and an undisclosed polymerization process. The raw material WheyXR (WXR) marketed by Glanbia is claimed to be a polymerized whey having sustained-release properties. It is believed that the large whey aggregates formed can limit the ability of pepsin to reach proteins and slow digestion in the stomach. Whey protein tends to pass quickly through the stomach and into the small intestine, so more technical means are needed to achieve slow digestion.

### SUMMARY

In view of this, a purpose of the present invention is to provide a whey protein composition, which has a slower digestion characteristic when passing through the gastrointestinal tract.

Another purpose of the present invention is to provide a whey protein composition that can slowly release leucine.

Another purpose of the present invention is to provide a whey protein composition that can significantly increase the viscosity in the stomach, thereby delaying the time of it entering the intestinal tract.

Another purpose of the present invention is to provide a whey protein composition that can reduce the digestion rate of β-lactoglobulin.

Another purpose of the present invention is to provide use of the above whey protein composition in the manufacture of a nutritional supplement, a muscle synthesis promoter and a dairy product and a method for preparing the above whey protein composition.

In order to achieve the above purposes, the present invention provides the following technical solutions:

A whey protein composition comprises whey protein and β-casein, wherein a mass ratio of β-casein to whey protein is not lower than 4.5:95.5. In a specific embodiment of the present invention, the whey protein and β-casein used are mainly derived from cow's milk, but raw milk derived from other sources are not excluded. The whey protein composition of the present invention may be a qualified mixture prepared directly by processing raw milk, or it may be a mixture in which β-casein and whey protein are compounded and added in proportion.

Preferably, a mass ratio of the β-casein to whey protein is (4.5:95.5)-(50:50); further preferably, a mass ratio of the β-casein to whey protein is (9: 91)-(20:80), more preferably, a mass ratio of the β-casein to whey protein is (9:90)-(17:83). In a specific embodiment of the present invention, a mass ratio of the β-casein to whey protein may be 4.6:95.4, 5:95, 9.4:90.6, 10:90, 15:85, 16.6:83.4 or 17:83.

In addition to directly compound β-casein and whey protein, the present invention can further use specific treatment (including keeping at low temperature for a certain period of time) to make β-casein be dissolved out from casein micelles and enter whey. Due to unique molecular chaperone effect of the β-casein, it forms a unique combination with α-lactalbumin and β-lactoglobulin in whey protein, thereby protecting whey protein from rapid digestion. Compared with commercially available products such as standard whey protein concentrate, the composition of the present invention has the characteristic of reducing the release rate of leucine, whether it is prepared by processing raw milk or compounding and adding materials in proportion.

Moreover, in the compositions of β-casein and whey protein in different ratios, the analysis of β-lactoglobulin residues showed that only the compositions with the ratio of above 4:96 can show a slower rate of digestion of β-lactoglobulin compared with standard whey protein concentrate.

On the basis of the aforementioned whey protein, the present invention found that the micronization process may further strengthen the sufficient combination of β-casein and whey protein, thereby further achieving the effect of slowly releasing leucine and increasing the viscosity of gastric juice in the digestion of *in vitro* digestion model, which may prevent the release of protein into the intestines and delay the digestive process. Compared with the micronization process at pH 6.5, the micronization process at pH 7.5 has more apparent effects in these aspects. Moreover, the composition of the present invention can achieve the above effects by micronization whether it is prepared by processing raw milk or compounding and adding materials in proportion. In addition, the micronization process may improve other physical properties of the mixture including particle size distribution, solubility, stability, viscosity, etc. Surprisingly, the present invention found that if the standard whey protein concentrate solely undergoes the micronization process without compounding with β-casein, the digestion rate of whey protein will be accelerated, which shows that the addition of β-casein can change this excessively rapid digestion rate phenomenon and can further slow the digestion process. Based on the above experimental conclusions, the whey protein composition of the present invention is preferably a micronized whey protein composition.

Preferably, the micronization is carried out under high temperature and high speed shearing at a pH value of 6.5-9.0; wherein the high temperature is 80-100°C, the high speed shearing is performed at 6000-20000 rpm, and a duration of the micronization is 3-10 min. More preferably, the high temperature is 91-99°C, the high speed shearing is performed at 8000-15000 rpm, and a duration of the micronization is 4-8 min. Among them, preferred parameters for the micronization process are: a pH of 7.5, a temperature of 95°C, a duration of 5 min, and a shear rate of 9600 rpm. After the micronization is completed, the materials are cooled rapidly to 15°C.

As a further solution optimization, in the present invention, a polysaccharide is added on the basis of the foregoing. Polysaccharide has more binding sites due to their natural viscosity advantages and the presence of polyhydroxyl groups, thereby having the conditions for further combination with whey protein rich in β-casein, which may further enhance the viscosity of the mixture or delay the release rate of leucine. Alginate and κ-carrageenan in the gastric juice of the *in vitro* digestion model have a higher viscosity than that of other polysaccharides tested, where the viscosity of κ-carrageenan is 30-50 times that of other polysaccharides. In addition, the addition of a polysaccharide in the micronization at pH7.5 has a better effect than that of the addition of a polysaccharide in the micronization at pH6.5.

According to an analysis of leucine release, potassium alginate can reduce the release rate of leucine from micronized whey protein rich in β-casein during *in vitro* digestion. Although the addition of κ-carrageenan did not significantly reduce the release rate of leucine from micronized whey protein rich in β-casein in the intestinal tract, considering that κ-carrageenan can cause a significant increase in the viscosity of gastric juice, it can be expected that whey protein may enter the intestinal tract more slowly after the supplementation with κ-carrageenan, which will help delay the release of free leucine in the small intestine in the body.

In digestion experiments, compared with standard whey protein concentrate and commercially available products and polysaccharide-added controls thereof, the micronized whey protein composition of the present invention with addition of the same polysaccharides has a lower degree of hydrolysis than that of each control, which indicates that the whey protein composition of the present invention has a better sustained-release effect. Similarly, the experimental group of micronization at pH 7.5 always has a better effect than that of the experimental group of micronization at pH 6.5.

Preferably, the polysaccharide of the present invention is selected from the group consisting of carrageenan, alginate, chitosan, carboxymethyl cellulose, tragacanth gum and a mixture thereof, and the polysaccharide is added at an amount of 0.1-0.3%. According to the aforementioned experimental results, in a specific embodiment, κ-carrageenan and/or potassium alginate can be added in order to achieve excellent effects in different digestive tracts.

In addition, the present invention further provides a method for preparing a whey protein composition by processing raw milk, comprising processing skimmed raw milk at a low temperature of 0-10°C (leaving it to stand for 10-120 h, preferably 10-24 h), then performing filtration with a membrane not less than 20-200 nm, and concentrating the permeate by ultrafiltration to remove lactose, to obtain a whey protein composition containing whey protein and β-casein.

β-casein is released from casein micelles and enriched in the supernatant of skimmed milk at low temperature, which is because the strength of the hydrophobic interaction decreases alongwith the decrease in temperature, thereby allowing β-casein to be dissolved out freely from the micelles and enter into the supernatant. β-casein can form its own micelles with a diameter not larger than 20-30 nm. Therefore, 20-200 nm (preferably 50 nm) ceramic or polymeric membranes are sufficient to retain casein micelles while allowing whey protein and β-casein to pass through and enter into the permeate. Then the permeate is concentrated through ultrafiltration (10 KDa) to remove lactose, and the left supernatant proteins contain β-casein and whey protein in a ratio of (4.5:95.5)-(20:80).

The results of SDS-PAGE gel electrophoresis show that by using a chemiluminescent imager for estimation, the β-casein and whey protein obtained after processing milk at 10°C, 4°C and 2°C have the following ratios: 4.6:95.4 at 10°C; 9.4:90.6 at 4°C and 16.6:83.4 at 2°C. Therefore, the preparation method of the present invention can easily achieve a whey protein containing 5-20% β-casein. If a whey protein composition with a higher proportion of β-caseincan is to be achieved, it can be obtained by a manner of compounding.

According to the foregoing description about the beneficial effects that can be brought by the micronization process, the preparation method of the present invention may further comprise a micronization process, wherein the micronization is carried out under high temperature and high speed shearing at a pH value of 6.5-9.0, which is followed by rapid cooling to prevent the denaturation of protein at high temperature for a long time. Preferably, the high temperature is 80-100°C, the high speed shearing is performed at 6000-20000 rpm, and a duration of the micronization is 3-10 min. More preferably, the high temperature is 91-99°C, the high speed shearing is performed at 8000-15000 rpm, and a duration of the micronization is 4-8 min. Among them, preferred parameters for the micronization process are: a pH of 7.5, a temperature of 95°C, a duration of 5 min, and a shear rate of 9600 rpm. After the micronization is completed, the materials are cooled rapidly to 15°C.

Preferably, the micronization process is carried out by performing concentration (a concentration of protein is not less than 4%) to obtain a concentrated solution, then performing micronization treatment, then further concentrating the resulting mixture to reach a total solid content of not less than 20%, and spray drying the obtained material into powder, not spray drying the obtained material into powder or preparing the obtained material into other forms of composition as needed.

In a specific embodiment of the present invention, the micronization process is carried out by concentrating the retentate after ultrafiltration at 55°C, until reaching a protein concentration of 5%-10%, adding HCl or NaOH to adjust the concentrate to pH 7.5, processing the concentrate at 95°C for 5 min while performing high speed shearing at 9600 rpm, then rapidly cooling the micronized protein system to 15°C, then further concentrating the resulting mixture to reach a total solid content of 20-25%, and finally spray drying the mixture at an inlet temperature of 200°C and an outlet temperature maintained between 90-100°C.

After micronization, a polysaccharide can further be added for mixing, wherein the polysaccharide is selected from the group consisting of carrageenan, alginate, chitosan, carboxymethyl cellulose, tragacanth gum and a mixture thereof, and it is added at an amount of 0.1-0.3%.

According to the preparation method provided above, the present invention further provides a whey protein composition prepared by the method. Since the whey protein composition provided by the present invention has multiple slow digestion technical effects, and has better slow digestion effects than similar products on the market, the present invention further provides use of the whey protein composition in the manufacture of a whey protein product with slow digestion and/or slow release of amino acids. The product may be a nutritional supplement, a muscle synthesis promoter or a dairy product.

Accordingly, the present invention further provides use of the whey protein composition in the manufacture of a nutritional supplement, a muscle synthesis promoter or a dairy product. The whey protein composition may be a qualified mixture prepared by processing raw milk, such as the preparation process mentioned above; or it may be a mixture in which β-casein and whey protein are compounded and added in proportion; or a mixture further micronized and/or added with a polysaccharide.

According to the above application, the present invention provides a nutritional supplement, a muscle synthesis promoter or a dairy product. The name of the product is specifically determined according to application fields, but as a common feature they all contain the whey protein composition described in the present invention, and other components can be added according to the needs of the product with excipients and/or nutrients that can be added to the food. The nutrients include but are not limited to vitamins, minerals, etc.

In a specific embodiment of the present invention, the present invention provides a nutritional supplement, which is presented in the form of a nutritional bar, and further comprises glucose syrup, glycerin, maltodextrin, coconut oil and lecithin in addition to the whey protein composition of the present invention.

In addition, the present invention further specifically provides a dairy product, which is presented in the form of powder, and comprises the whey protein composition of the present invention, and lactose, fructose, glucose, cream, vitamins, minerals and lecithin. The vitamins include but are not limited to vitamins A, C, D and E, and the minerals include but are not limited to calcium salts, iron salts, zinc salts and magnesium salts, such as phosphate salts or sulfate salts thereof.

In the digestion experiment of specific formula products, the present invention has obtained the result that different food formulas have a strong influence on the release rate of amino acids, where the digestion rate of leucine of the powder formula is slower than that of the solid bar formula. Under the same food formula, the whey protein composition of the present invention has a leucine release effect close to that of the commercially available control sample.

It can be seen from the above technical solutions that the whey protein composition provided by the present invention mainly consists of a novel milk protein component, which has a slower digestibility than other whey proteins on the market. It is a whey protein concentrate rich in β-casein that can be micronized and compounded with natural polysaccharides, which can delay digestion, promote muscle synthesis and provide adequate nutrition.

### BRIEF DESCRIPTION OF DRAWINGS

FIG. 1 shows the exemplary preparation flowchart of the whey protein composition of the present invention;
FIG. 2 shows the protein electrophoresis graph of the whey protein composition of the present invention obtained under treatment at different temperatures;
FIG. 3 shows the leucine release curve of the whey protein composition rich in β-casein and the control group after being digested by artificially simulated digestive juice;
FIG. 4 shows the leucine release curve of the whey protein composition of the present invention and the control group after being digested by artificially simulated digestive juice;
FIG. 5 shows the viscosity curve when the whey protein composition of the present invention is formulated into a 5% protein concentration solution to perform the micronization process;
FIG. 6 shows the viscosity curve of the non-micronized whey protein composition and the control sample after being digested by artificially simulated digestive juice;
FIG. 7 shows the viscosity curve of the whey protein composition of the present invention and the control sample after being digested by artificially simulated digestive juice;
FIG. 8 shows the viscosity curve of the whey protein composition of the present invention after being compounded with alginate and carrageenan respectively and digested by artificially simulated digestive juice;
FIG. 9 shows the leucine release curve of the whey protein composition of the present invention after being compounded with potassium alginate and digested by artificially simulated digestive juice;
FIG. 10 shows the leucine release curve of the whey protein composition of the present invention after being compounded with carrageenan and digested by artificially simulated digestive juice;
FIG. 11 shows the residual amount curve of the whey protein in the whey protein composition of the present invention obtained under treatment at different temperatures and digested by artificially simulated digestive juice;
FIG. 12 is a histogram showing the relative degree of proteolysis of the whey protein composition of the present invention after being digested by artificial gastric juice and intestinal juice respectively;
FIG. 13 is a histogram showing the degree of proteolysis of the whey protein composition of the present invention before and after being digested with artificial digestive juice;
FIG. 14 shows the leucine release curve of the whey protein composition of the present invention after being applied in the formula and digested by artificially simulated digestive juice;
FIG. 15 shows the non-reducing (NR) and reducing (R) gel electrophoresis images of the whey protein composition of the present invention;
FIG. 16 shows the viscosity curve of the whey protein affected by different complex polysaccharides in artificially simulated digestive juice;
FIG. 17 shows the viscosity curve of the whey protein affected by compounding different concentrations of carrageenan in artificially simulated digestive juice.

### DETAILED DESCRIPTION

The present invention discloses a whey protein composition and a preparation method thereof and use thereof. Those skilled in the art can learn from the content of this article and appropriately improve the process parameters to realize the invention. In particular, it should be noted that all similar replacements and modifications are apparent to those skilled in the art, and they are all considered to be included in the present invention. The whey protein composition of the present invention and the preparation method thereof and use thereof have been described through preferred embodiments, and those skilled in the art can apparently make modifications or appropriate changes and combinations to the whey protein composition and the preparation method thereof and use thereof described herein without departing from the content, spirit and scope of the present invention to realize and apply the technology of the present invention.

Compared with ordinary whey protein concentrates and commercially available products, the key content of the whey protein composition of the present invention includes three improvements or any combination thereof, namely: 1) enriching β-casein by membrane filtration process at low temperature (0-10°C); 2) improving characteristics such as particle size distribution, solubility, stability, viscosity, and leucine release by micronization treatment; 3) specific polysaccharides (κ-carrageenan and/or potassium alginate) causing no gelling phenomenon, but further increasing viscosity and delaying the release of leucine.

In the comparative experiments carried out in the present invention, unless otherwise specified, additional experimental conditions are remained the same except for the due differences between each group.

The whey protein composition provided by the present invention and the preparation method and use thereof will be further described below.

### Example 1: Preparation of the whey protein composition with skimmed raw milk

### 1. Production of whey protein raw materials rich in β-casein

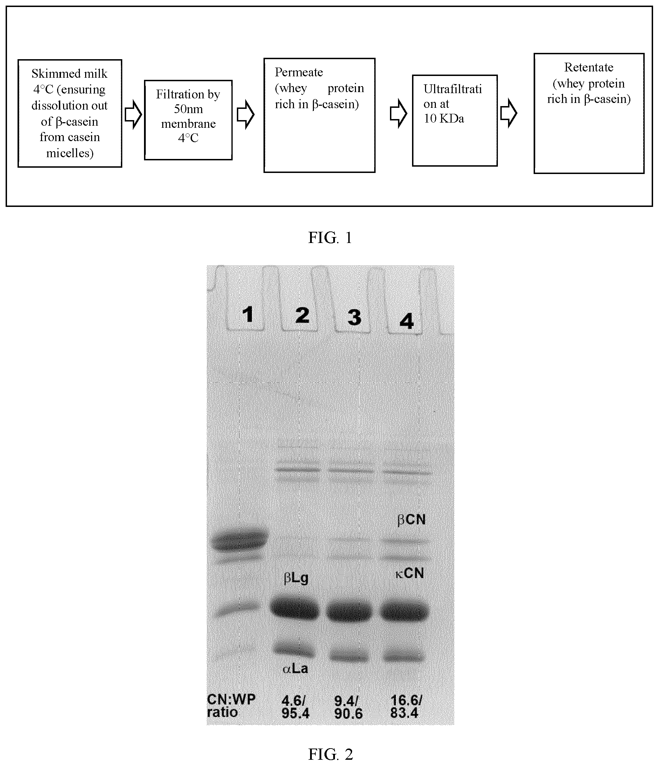

Raw milk was skimmed, pasteurized, and then left to stand at a low temperature, such as 4°C for 24 h to enable β-casein to be released from casein micelles and enriched in the supernatant of the skimmed milk. A 50 nm ceramic membrane or a polymer membrane was used to retain the casein micelles while allowing whey protein and β-casein to pass through and enter into the permeate. Then the permeate was concentrated by ultrafiltration at 10 KDa to remove lactose. The remained supernatant protein was a whey protein material rich in β-casein. See FIG. 1 for the exemplary flow chart.

### 2. Micronization

The retentate obtained from step 1 was concentrated at 55°C to achieve a protein concentration of 5%. The concentrate was adjusted to pH 7.5 with 1M HCl or 40% NaOH, and processed at 95°C for 5 min under high speed shearing at 9600 rpm. After this step, the micronized protein system was rapidly cooled to 15°C. Then the mixture was further concentrated to reach a total solid content of 20-25%, and finally spray-dried at an inlet temperature of 200°C and an outlet temperature maintained between 90-100°C.

### 3. Addition of polysaccharide

The optimum polysaccharide types and addition ratios for increasing the viscosity of the above raw materials in the gastric digestion stage were determined through experiments. 0.3% κ-carrageenan had the maximum viscosity in the stomach, and 0.3% alginate also had increased viscosity and the viscosity maintained throughout the digestion process in the intestinal tract. Finally, it was found that the whey protein micronized at pH 7.5 and compounded with a polysaccharide exhibited an excellent sustained-release effect different from the whey protein concentrate.

### Example 2: Whey protein raw material rich in β-casein obtained at different temperatures

According to the method of step 1 in Example 1, milk was processed at temperatures of 10°C, 4°C and 2°C to obtain a whey protein material rich in β-casein. The ratio of β-casein and whey protein was estimated using a chemiluminescent imager. The results are shown in FIG. 2.

It can be clearly seen from FIG. 2 that the ratio is 4.6:95.4 at 10°C; 9.4:91.6 at 4°C; and 16.6:83.4 at 2°C. Therefore, the present invention can easily achieve a whey protein composition with a ratio ranging from 4.5:94.5 to 17:83 at a low temperature of 2-10°C, and it can be expected to obtain a whey protein composition with a ratio ranging from 4.5:94.5 to 20:80 at 0-10°C.

### Example 3: In vitro digestion of whey protein rich in β-casein

Experimental purpose: To study the changes of β-casein protein and whey protein before and after digestion, and to screen out protein raw materials having low release rate of leucine.

Experimental method: The target protein was enzymolyzed using a relevant digestive enzyme according to the standardised static *in vitro* digestion method, and the content of leucine in the digested solution was detected using Shimadzu LCMS 2010 EV system.

### Experimental grouping:

Control group: WPC represents whey protein concentrate (WPC392, Fonterra); WXR represents WheyXR, which is commercially available;

Experimental group 1: BCNWP6.5 represents a whey sample produced by membrane filtration containing β-casein when pH was adjusted to 6.5 (prepared according to step 1 of Example 1);

Experimental group 2: BCNWP7.5 represents a whey sample produced by membrane filtration containing β-casein when pH was adjusted to 7.5 (prepared according to step 1 of Example 1);

Experimental group 3: ComBCNWP7.5 represents a whey sample produced by mixing β-casein and whey protein WPC392 (10:90) when pH was adjusted to 7.5;

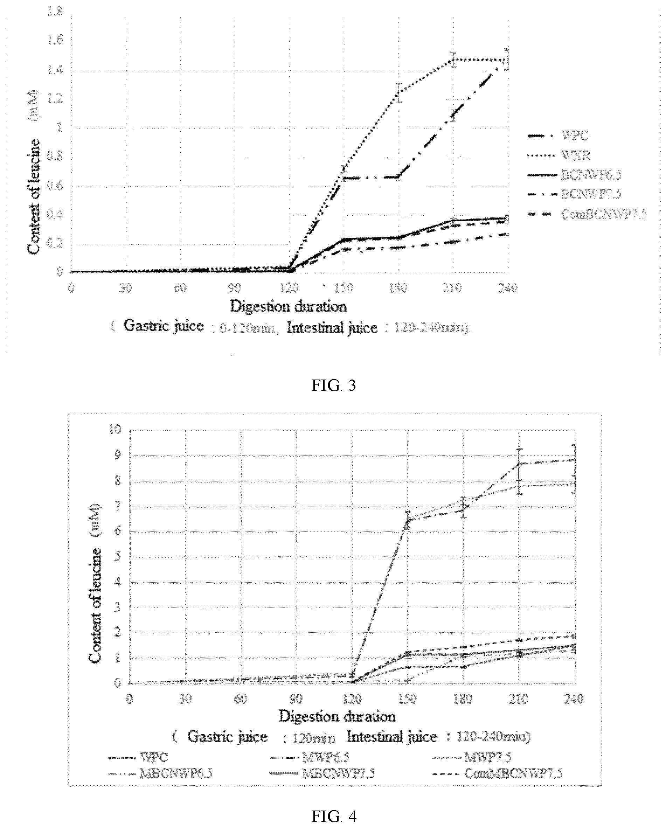

The results are shown in FIG. 3. The leucine in the two control samples reached 1.4-1.6 mM after 120-240 min of digestion by intestinal juice, while the leucine released in the three experimental groups was only 0.2-0.4 mM after enzymatic hydrolysis in the digestion stage of intestinal juice, indicating that the digestion rates in the three experimental groups were lower.

### Example 4: In vitro digestion of whey protein rich in β-casein

Experimental purpose: To compare the effect of β-casein protein on the digestion rate of micronized and non-micronized whey protein.

Experimental method: The target protein was enzymolyzed using a relevant digestive enzyme according to the standardised static *in vitro* digestion method, and the content of leucine in the digested solution was detected using Shimadzu LCMS 2010 EV system.

### Experimental grouping:

Control group: WPC: whey protein concentrate (WPC392, Fonterra);
Experimental group 1: MWP6.5 represents a whey protein concentrate micronized at pH 6.5;
Experimental group 2: MWP7.5 represents a whey protein concentrate micronized at pH 7.5;
Experimental group 3: MBCNWP6.5 represents a whey raw material rich in β-casein micronized at pH 6.5 (prepared according to the method in step 1-2 of Example 1);
Experimental group 4: MBCNWP7.5 represents a whey raw material rich in β-casein micronized at pH 7.5 (prepared according to the method in step 1-2 of Example 1);
Experimental group 5: ComBCNWP7.5 represents a whey sample rich in β-casein produced by mixing β-casein and whey protein WPC392 (10:90) and micronized at pH 7.5;

The results are shown in FIG. 4. The release rate of leucine in experimental groups 1 and 2 was faster than that of the control group, indicating that micronization can accelerate the digestion of whey protein; the digestion rate in experimental groups 3 and 4 was slower than that of experimental groups 1 and 2, indicating that β-casein can reduce the digestion rate of micronized whey protein; the release rate of amino acids of experimental group 5 was close to that of experimental groups 3 and 4, indicating that the effect of slowly releasing leucine can also be achieved by mixing β-casein and whey protein in the ratio in experimental groups 3 and 4.

### Example 5: Viscosity experiment of whey protein samples with different casein contents

Experimental purpose: Foods that are "thickened" in the gastric juices tend to delay gastric emptying, and possibly significantly delay the digestion. The purpose of this experiment is to compare the viscosity of the samples with the control group to determine the type of sample that delays digestion.

Experimental method: A solution with a total protein content of 5% was prepared. The viscosity at a total protein concentration of 5% under the same conditions within 180 s was detected using a MCR301 rheometer and cone plate, and then a 2-hour digestion experiment for simulated artificial gastric juice was carried out.

### Experimental grouping:

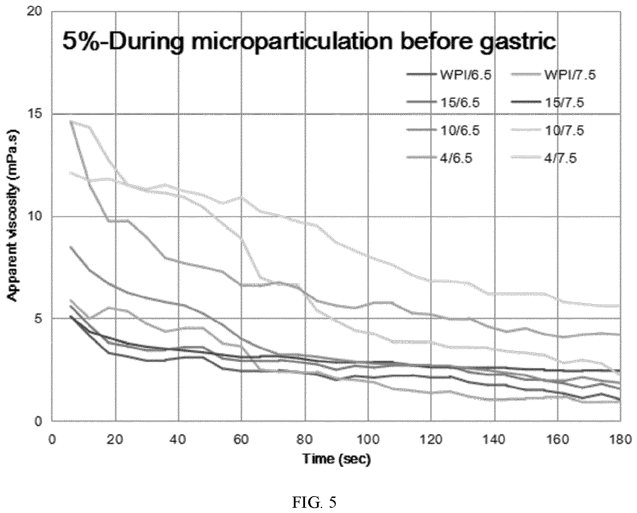

Control group: WPI6.5/7.5 (an isolated whey protein, Fonterra WPI895, the same WPI in this experiment) represents an isolated whey protein micronized at pH 6.5/7.5.
Experimental group 1: 15/6.5 and 15/7.5 represent whey protein samples prepared by micronizing sample solutions at pH 6.5/7.5 respectively, which were prepared by keeping skimmed milk at 15°C for 24 h, wherein β-casein and whey protein were in a ratio of about 4:96.
Experimental group 2: 10/6.5 and 10/7.5 represent whey protein samples prepared by micronizing sample solutions at pH 6.5/7.5 respectively, which were prepared by keeping skimmed milk at 10°C for 24 h, wherein β-casein and whey protein were in a ratio of about 5:95.
Experimental group 3: 4/6.5 and 4/7.5 represent whey protein samples prepared by micronizing sample solutions at pH 6.5/7.5 respectively, which were prepared by keeping skimmed milk at 4°C for 24 h, wherein β-casein and whey protein were in a ratio of about 10:90.
The experimental results are shown in FIG. 5. Compared with the control sample WPI, the samples in the experimental groups all had higher viscosity. The lower the temperature at which skimmed milk was stored, the higher the viscosity of the 5% protein solution prepared. Comparing the two pH levels, the viscosity of the protein solution at pH 7.5 was higher.

### Example 6: Viscosity experiment of whey protein samples rich in β-casein

Experimental purpose: To determine the effect of micronization on viscosity.
Experimental method: The viscosity of artificially simulated gastric juice and intestinal juice was detected using a MCR301 rheometer and cone-plate.

### Experimental grouping:

Control group 1: WPC (a whey protein concentrate, Fonterra WPC392); WXR represents WheyRX, which is a competing product;
Control group 2: MW represents whey micelles;
Control group 3: MWP6.5 and MWP7.5A represent whey proteins WPC392 micronized at pH 6.5 or 7.5 respectively;
Experimental group 1: BCNWP6.5 and BCNWP7.5 represent whey samples containing β-casein produced by membrane filtration when pH was adjusted to 6.5 and 7.5 respectively (prepared according to the method in step 1 of Example 1);
Experimental group 2: MBCNWP6.5 and MBCNWP7.5 represent whey proteins rich in β-casein micronized at pH 6.5 or 7.5 respectively (prepared according to the method in step 1-2 of Example 1);

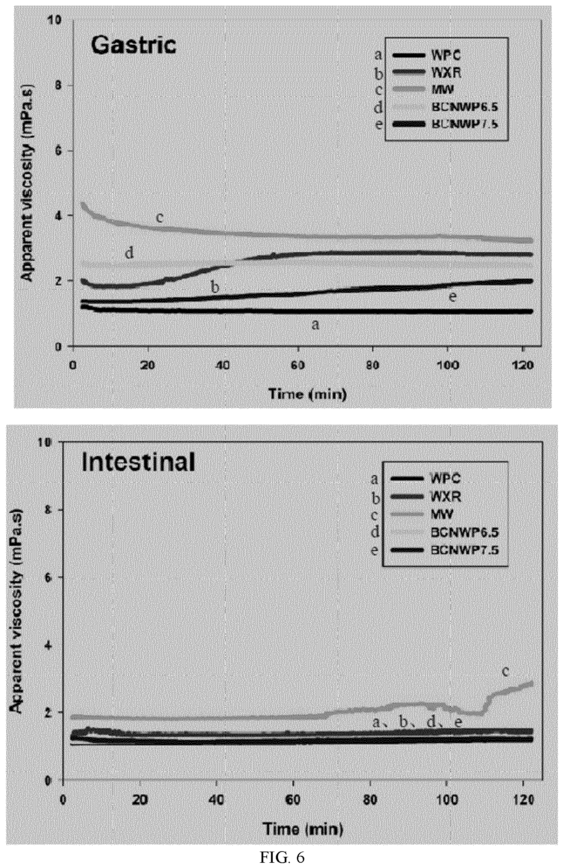

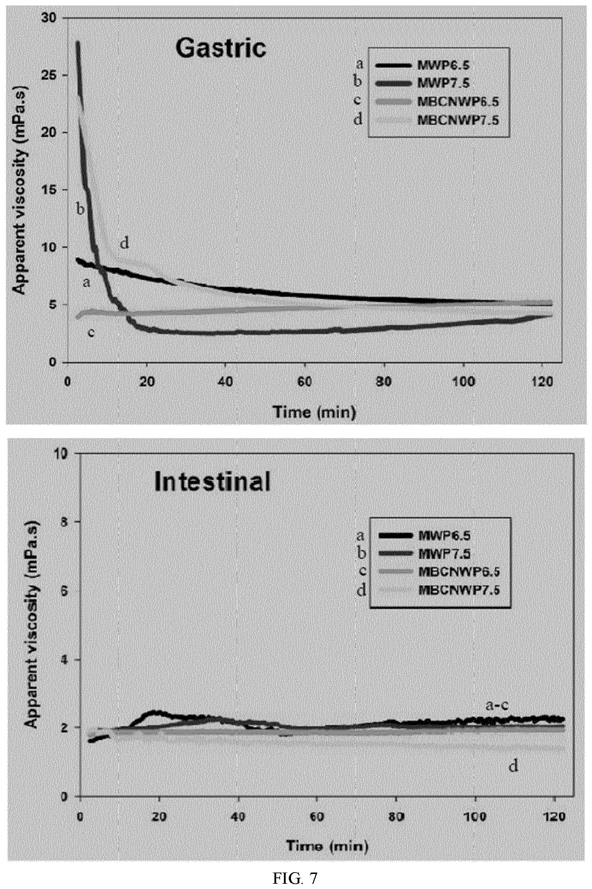

The experimental results are shown in FIG. 6 and FIG. 7. The viscosity of the micronized experimental group 2 in gastric juice was significantly higher than that of the non-micronized experimental group 1. In experimental group 2, the viscosity of the material micronized at pH 7.5 in gastric juice was significantly higher than that of the material micronized at pH 6.5.

### Example 7: In vitro digestion experiment with addition of polysaccharide raw materials --viscosity test

Experimental purpose: To determine the effect of polysaccharides on increasing viscosity.
Experimental method: A polysaccharide was added at a ratio of 0.3% w/w, and the resulting mixture was mixed evenly. The viscosity of artificially simulated gastric juice and intestinal juice was detected using a MCR301 rheometer and a cone-plate.

### Experimental grouping:

Control group 1: WXR+ALG represents commercial product WXR+ potassium alginate;
Control group 2: WXR+KCG represents commercial product WXR+ κ-carrageenan;
Experimental group 1: MBCNWP6.5+ALG represents whey rich in β-casein micronized at pH 6.5 + potassium alginate (prepared according to the method in step 1-3 of Example 1);
Experimental group 2: MBCNWP7.5+ALG represents whey rich in β-casein micronized at pH 7.5 + potassium alginate (prepared according to the method in step 1-3 of Example 1);
Experimental group 3: MBCNWP6.5+KCG represents whey rich in β-casein micronized at pH 6.5+κ-carrageenan (prepared according to steps 1-3 of Example 1);
Experimental group 4: MBCNWP7.5+KCG represents whey rich in β-casein micronized at pH 7.5+κ-carrageenan (prepared according to steps 1-3 of Example 1);

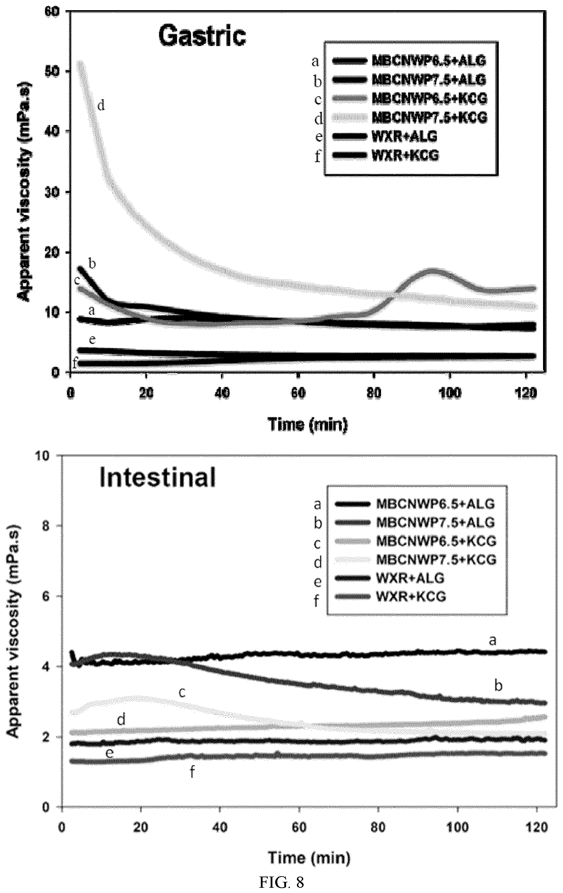

The experimental results are shown in FIG. 8. The experimental group 2 and experimental group 4 formed complexes with the polysaccharide at pH 7.5, which had a higher viscosity than that with the polysaccharide at pH 6.5 and that of the control group.

### Example 8: In vitro digestion experiment with addition of polysaccharide raw materials -- release of amino acids

Experimental purpose: To determine the effect of the two screened out on the release rate of leucine.
Experimental method: A polysaccharide was added at a ratio of 0.3% w/w, and the resulting mixture was mixed evenly. The target protein was enzymolyzed with a relevant digestive enzyme according to the standardised static *in vitro* digestion method, and the content of leucine in the digested solution was detected by Shimadzu LCMS 2010 EV system.

### Experimental grouping:

Control group 1: WPC (a whey protein concentrate, Fonterra WPC392);
Experimental group 1: MBCNWP6.5 represents whey rich in β-casein micronized at pH 6.5 (prepared according to step 1-2 of Example 1);
Experimental group 2: MBCNWP7.5 represents whey rich in β-casein micronized at pH 7.5 (prepared according to step 1-2 of Example 1);
Experimental group 3: MBCNWP6.5+ALG represents whey rich in β-casein micronized at pH 6.5 + potassium alginate (prepared according to the method in step 1-3 of Example 1);
Experimental group 4: MBCNWP7.5+ALG represents whey rich in β-casein micronized at pH 7.5 + potassium alginate (prepared according to the method in step 1-3 of Example 1);
Experimental group 5: MBCNWP6.5+KCG represents whey rich in β-casein micronized at pH 6.5+κ-carrageenan (prepared according to steps 1-3 of Example 1);
Experimental group 6: MBCNWP7.5+KCG represents whey rich in β-casein micronized at pH 7.5+κ-carrageenan (prepared according to steps 1-3 of Example 1);

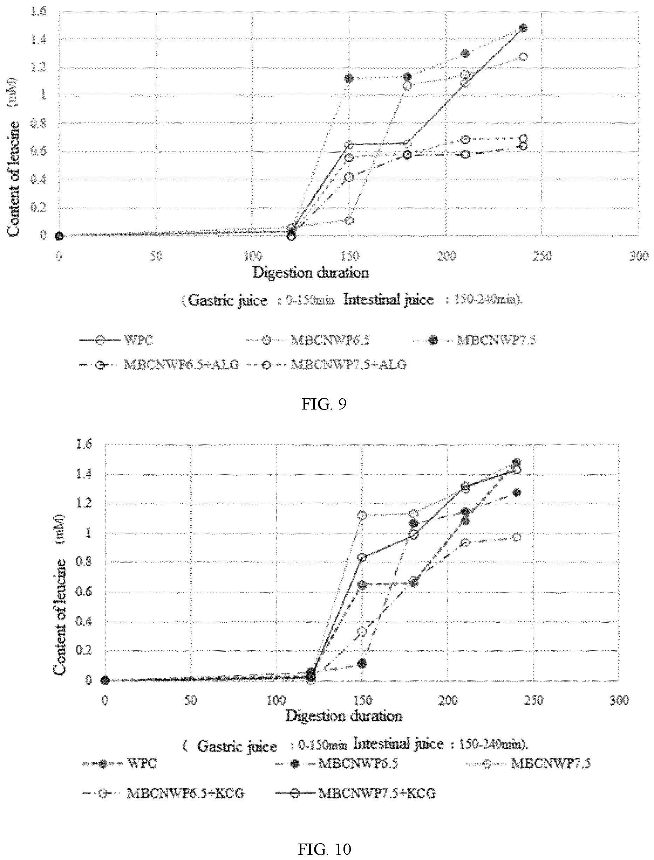

The experimental results show that potassium alginate can reduce the release rate of amino acids from micronized whey protein rich in β-casein during *in vitro* digestion (FIG. 9).

Although the addition of κ-carrageenan cannot significantly reduce the release rate of leucine from micronized whey protein rich in β-casein in the intestinal tract (FIG. 10), considering that κ-carrageenan can cause a significant increase in viscosity of gastric juice, it can be expected that whey protein may enter the intestine more slowly after supplementation with κ-carrageenan, which may help delay the release of free leucine in the small intestine *in vivo.*

### Example 9: Digestion experiment--analysis of residual amount of β-lactoglobulin in whey protein

Experimental purpose: To compare the degree of digestion and to determine the ability of slow digestion.
Experimental method: A solution with a total protein content of 10% was prepared, and then *in vitro* digestion was performed. The residual amount of β-lactoglobulin before digestion, after digestion in gastric juice, and after digestion in intestinal juice was determined using size exclusion high-performance liquid chromatography (SCE-HPLC) and reversed-phase high-performance liquid chromatography (RP-HPLC).

### Experimental grouping:

Control group: WPI6.5/7.5 (an isolated whey protein, Fonterra WPI895, the same WPI in this test) represents an isolated whey protein micronized at pH 6.5/7.5.
Experimental group 1: 15/6.5 and 15/7.5 represent whey protein samples prepared by micronizing sample solutions at pH 6.5/7.5 respectively, which were prepared by keeping skimmed milk at 15°C for 10 h, wherein β-casein and whey protein were in a ratio of about 4:96 (prepared according to the method of steps 1-2 of Example 1, and the temperature, duration of the low temperature treatment and pH parameters were changed accordingly).
Experimental group 2: 10/6.5 and 10/7.5 represent whey protein samples prepared by micronizing sample solutions at pH 6.5/7.5 respectively, which were prepared by keeping skimmed milk at 10°C for 10 h, wherein β-casein and whey protein were in a ratio of about 5:95 (prepared according to the method of steps 1-2 of Example 1, and the temperature, duration of the low temperature treatment and pH parameters were changed accordingly).
Experimental group 3: 4/6.5 and 4/7.5 represent whey protein samples prepared by micronizing sample solutions at pH 6.5/7.5 respectively, which were prepared by keeping skimmed milk at 4°C for 10 h, wherein β-casein and whey protein were in a ratio of about 10:90 (prepared according to the method of steps 1-2 of Example 1, and the temperature, duration of the low temperature treatment and pH parameters were changed accordingly).

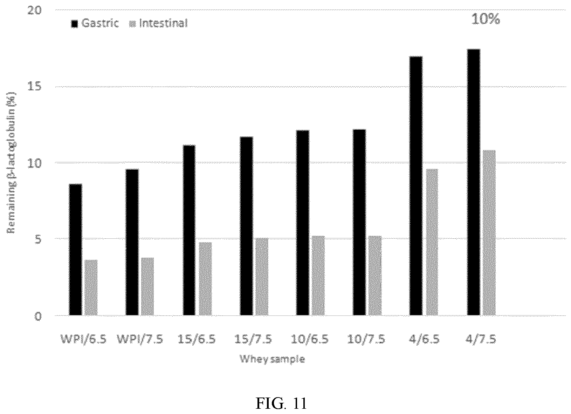

The experimental results are shown in FIG. 11. As the temperature decreased, the ratio of β-casein:whey protein increased, and the ratio of undigested β-lactoglobulin in whey protein after *in vitro* digestion gradually increased. This indicates that the experimental group with a higher proportion of β-casein showed a slower digestion rate than the standard whey protein control group.

Compared to the residual amount in the standard whey protein control groups (WPI/6.5 and WPI/7.5), a whey protein composition with a ratio of β-casein to whey protein of about 5:95 (strictly 4.6:95.4) or a composition with a higher ratio of β-casein to whey protein may have more residual β-lactoglobulin at the end of digestion than the control group. Therefore, the whey protein composition of the present invention with a mass ratio of β-casein to whey protein of not lower than 4.6:95.4 can show a slower digestion rate.

### Example 10: Digestion experiment -- analysis of hydrolysis degree 1

Experimental purpose: To compare the degree of hydrolysis and to determine the ability of slow digestion.
Experimental method: The proteins digested with gastric juice and intestinal juice were tested for the degree of hydrolysis using the method of J. Adler-Nissen (1979).

### Experimental grouping:

Control group 1: WXR+ALG-G/I represents commercial WXR+0.3% potassium alginate, which were digested by artificial simulated gastric juice/intestinal juice respectively.
Control group 2: WXR+KCG-G/I represents commercial WXR+0.3% κ-carrageenan, which were digested by artificial simulated gastric juice/intestinal juice respectively.
Experimental group 1: MBCNWP6.5+ALG-G/I represents whey protein rich in β-casein micronized at pH 6.5+0.3% potassium alginate (prepared according to the method in steps 1-3 of Example 1), which were digested by artificial simulated gastric juice and intestinal juice.
Experimental group 2: MBCNWP7.5+ALG-G/I represents whey protein rich in β-casein micronized at pH 7.5+ 0.3% potassium alginate (prepared according to the method in steps 1-3 of Example 1), which were digested by artificial simulated gastric juice and intestinal juice.
Experimental group 3: MBCNWP6.5+KCG-G/I represents whey protein rich in β-casein micronized at pH 6.5+0.3% κ-carrageenan (prepared according to the method in steps 1-3 of Example 1),which were digested by artificial simulated gastric juice and intestinal juice.
Experimental group 4: MBCNWP7.5+KCG-G/I represents whey protein rich in β-casein micronized at pH 7.5+0.3% κ-carrageenan (prepared according to steps 1-3 of Example 1), which were digested by artificial simulated gastric juice and intestinal juice.

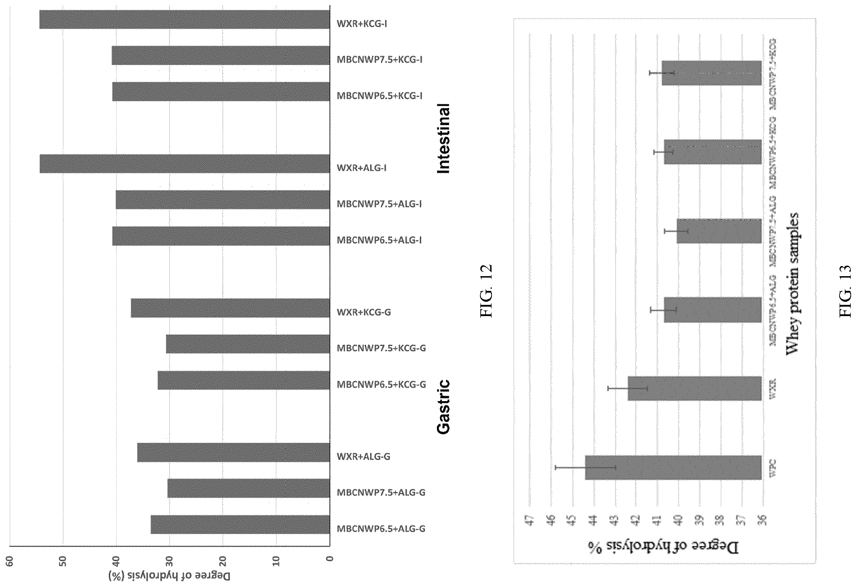

The experimental results are shown in FIG. 12. The degree of hydrolysis of the experimental groups 1 and 2 in the gastric juice was about 30%, and the degree of hydrolysis of the control group added with ALG in the gastric juice was more than 35%. In addition, the degree of hydrolysis of the experimental groups 1 and 2 in the intestinal juice was about 40%, and the degree of hydrolysis of the control group added with ALG in the intestinal juice was close to 55%. The degree of hydrolysis of the samples in the experimental group 3 and 4 in the gastric juice was also about 30%, and the degree of hydrolysis of the control group added with KCG in the gastric juice was more than 35%. Moreover, the degree of hydrolysis of the experimental groups 3 and 4 in the intestinal juice was about 40%, and the degree of hydrolysis of the control group added with KCG in the intestinal juice was close to 50%. This indicates that the sustained-release effect of the experimental groups 1, 2, 3, and 4 was more prominent. The degree of hydrolysis of samples micronized at pH 7.5 in experimental groups 1, 2, 3, and 4 was lower than that at pH 6.5, indicating that the sustained-release effect of the samples micronized at pH 7.5 was better.

### Example 11: Digestion experiment -- analysis of hydrolysis degree 2

Experimental purpose: To compare the degree of hydrolysis and to determine the ability of slow digestion.
Experimental method: The proteins digested with gastric juice and intestinal juice were tested for the degree of hydrolysis using the trinitrobenzenesulfonic acid (TNBS) method introduced by J. Adler-Nissen (1979).

### Experimental grouping:

Control group 1: WPC (a whey protein concentrate, Fonterra WPC392);
Control group 2: WXR (WheyRX, a competing product);
Experimental group 1: MBCNWP6.5+ALG represents whey protein rich in β-casein micronized at pH 6.5+0.3% potassium alginate (prepared according to the method of steps 1-3 of Example 1), which were digested by artificially simulated digestive juice.
Experimental group 2: MBCNWP7.5+ALG represents whey protein rich in β-casein micronized at pH 7.5+ 0.3% potassium alginate (prepared according to the method in steps 1-3 of Example 1), which were digested by artificial simulated digestive juice.
Experimental group 3: MBCNWP6.5+KCG represents whey protein rich in β-casein micronized at pH 6.5+0.3% κ-carrageenan (prepared according to the method in steps 1-3 of Example 1), which were digested by artificial simulated digestive juice.
Experimental group 4: MBCNWP7.5+KCG represents whey protein rich in β-casein micronized at pH 7.5+0.3% κ-carrageenan (prepared according to steps 1-3 of Example 1), which were digested by artificial simulated digestive juice.

The experimental results are shown in FIG. 13. The degree of hydrolysis of the samples in the experimental groups 1, 2, 3 and 4 did not exceed 41%, the degree of hydrolysis of the control group 1 exceeded 44%, and the degree of hydrolysis of the control group 2 exceeded 42%, indicating that the experimental groups 1, 2, 3, and 4 had relatively prominent sustained-release effects. The degree of hydrolysis of the samples micronized at pH 7.5 in experimental groups 1, 2, 3, and 4 was lower than that at pH 6.5, indicating that the sustained-release effect of the samples micronized at pH 7.5 was better.

### Example 12: Digestion experiment after the addition of samples into the formula-- release of amino acids

Experimental purpose: To determine the effect of different formula forms on the digestion rate.

Experimental method: The final product was prepared according to the formula in Table 1 below, the target protein was enzymolyzed with a relevant digestive enzyme according to the standardised static *in vitro* digestion method, and the content of leucine in the digested solution was detected using Shimadzu LCMS 2010 EV system.

**Table 1**

| Powder (per 100 g) P1 | | Solid bar (per 60 g) P2 | |
|---|---|---|---|
| Ingredient | Content (%) | Ingredient | Content (%) |
| Protein (MBCNWP7.5 /WXR) | 28.1 | Protein (MBCNWP7.5/ WXR) | 46 |
| K-carrageenan | 0.3 | Glucose syrup | 27 |
| Lactose | 26.3 | Glycerin | 17 |
| Saccharide (fructose 42%+glucose) | 26.6 | Maltodextrin, DE ∼ 17 | 3.5 |
| Fat (cream) | 10 | Coconut oil | 5 |
| Vitamins | 1 | K-carrageenan | 0.3 |
| Vitamin C | | | |
| Vitamin E (Tocopherol) | | | |
| Vitamin A | | | |
| Vitamin D | | | |
| Minerals: | 3 | Lecithin | 0.5 |
| Calcium phosphate | | | |
| Ferrous sulfate | | | |
| Zinc sulfate | | | |
| Magnesium sulfate | | | |
| Lecithin | 0.5 | Water | 0.7 |
| Water (contained in powder) | 4-5 | | |

### Experimental grouping:

Control group 1: P1+WXR represents powdered formula P1+commercial product WXR which slowly released whey raw materials;
Control group 2: P2+WXR represents solid bar formula P2+commercial product WXR which slowly released whey raw materials;
Experimental group 1: P1+MBCNWP7.5 represents powdered formula P1+ whey raw material rich in β-casein micronized at pH 7.5+ 0.3% x-carrageenan (prepared according to steps 1-3 of Example 1);
Experimental group 2: P2+MBCNWP7.5 represents solid bar formula + whey raw material rich in β-casein micronized at pH 7.5+ 0.3% x-carrageenan (prepared according to steps 1-3 of Example 1).

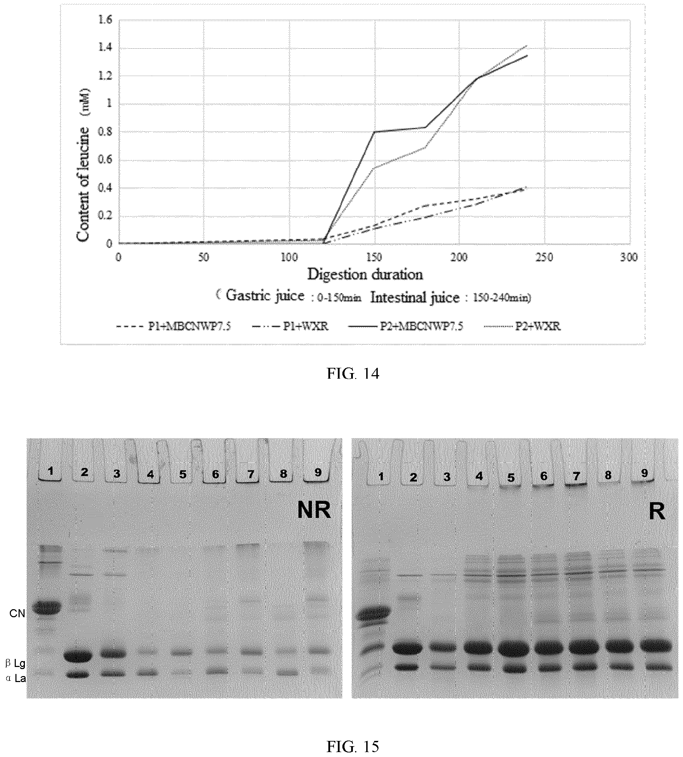

The experimental results are shown in FIG. 14. Different food formulas had a strong impact on the release rate of amino acids, and the digestion rate of powder formula is slower than that of solid bar formula; under the same food formula, the whey protein composition of the present invention had a leucine release effect close to that of the WXR control sample.

### Example 13: Non-reducing (NR) and reducing (R) SDS-PAGE gel electrophoresis experiments of different protein samples

### Experimental grouping:

1. Milk;
2. A whey protein isolated from the milk in Group 1;
3. A whey protein rich in β-casein prepared from the whey protein in Group 2 (retentate after ultrafiltration/diafiltration, with a total solid concentration of 0.2%);
4. A whey protein micronized at pH 6.5 (same as the whey protein in Group 2);
5. A whey protein micronized at pH 7.5 (same as the whey protein in Group 2);
6. A whey protein rich in β-casein micronized at pH 6.5 (same as the whey protein in Group 3, with a total solid concentration of 10%);
7. A whey protein rich in β-casein micronized at pH 7.5 (same as the whey protein in Group 3, with a total solid concentration of 10%);
8. A whey protein rich in β-casein micronized at pH 6.5 (same as Group 6, powder);
9. A whey protein rich in β-casein micronized at pH 7.5 (same as Group 7, powder).

The results are shown in FIG. 15. The non-reducing (NR) gel electrophoresis only shows proteins that are not aggregated with other proteins, and the reducing (R) gel electrophoresis shows all proteins because the aggregation reaction between proteins was destroyed. Lanes 4, 6 and 8 show the proteins micronized at pH 6.5, and the bottom band (representing α-lactalbumin) in the non-reducing gel was almost identical to that in lane 3 of the non-micronized control sample. Moreover, the second band from the bottom (representing β-lactoglobulin) almost disappeared, indicating that β-lactoglobulin was almost completely aggregated after micronization.

Lanes 5, 7 and 9 show the proteins micronized at pH 7.5 in which the bottom band became indistinct, and the second band was slightly stronger than that of lanes 4, 6 and 8, indicating that more α-lactalbumin and less β-lactoglobulin were aggregated. Therefore, the different mechanisms of micronization of whey protein at two pHs can be observed from this figure.

### Example 14: Viscosity test of whey proteins added with different polysaccharides in artificially simulated digestive juice

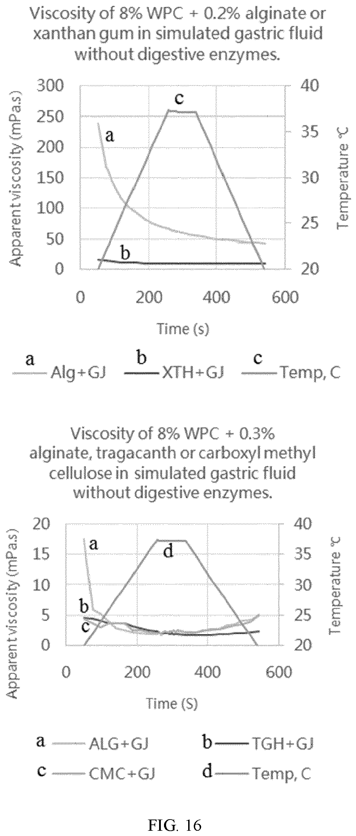

In artificial gastric juice (without enzyme), the viscosity of WPC392 (WP) protein solution with a protein concentration of 8% and added with 0.2% or 0.3% by weight of selected polysaccharides was detected. ALG represents potassium alginate; CMC represents carboxymethyl cellulose; TGH represents tragacanth gum; XTH represents xanthan gum, Temp represents temperature, and GJ represents artificial gastric juice. The results are shown in FIG. 16.

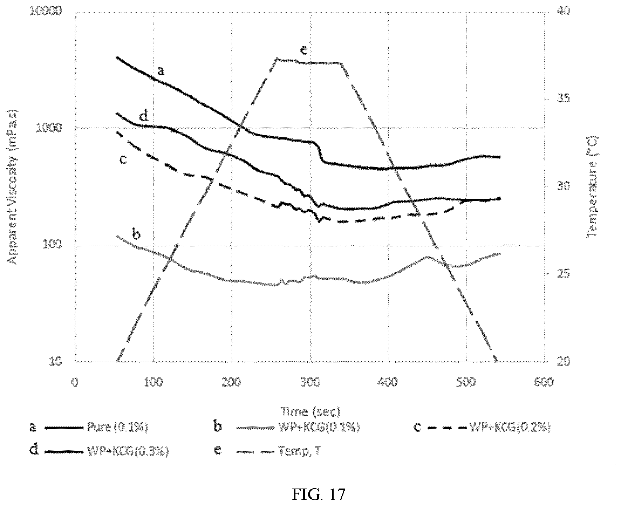

In addition, in artificial gastric juice (without enzyme), the viscosity of WPC392 protein solution with a protein concentration of 8% and added with 0.1-0.3% by weight of carrageenan was detected. Pure represents 0.1% by weight of carrageenan. The results are shown in FIG. 17.

From FIG. 16 and FIG. 17, it can be clearly seen that the viscosity of κ-carrageenan in the gastric juice of the *in vitro* digestion model was significantly higher than that of other tested polysaccharides, which was about 30-50 times that of other polysaccharides. The viscosity of potassium alginate in the gastric juice of the *in vitro* digestion model was also significantly higher than that of other tested polysaccharides.

The above are only preferred embodiments of the present invention, it should be noted that, for those of ordinary skill in the art, without departing from the principle of the present invention, several improvements and modifications can also be made, and these improvements and modifications should be considered to be included within the protection scope of the present invention.

## Claims

1. A whey protein composition, comprising whey protein and β-casein, wherein a mass ratio of β-casein to whey protein is not lower than 4.5:95.5.

2. The whey protein composition according to claim 1, wherein a mass ratio of the β-casein to whey protein is (4.5:95.5)-(50:50).

3. The whey protein composition according to claim 1 or 2, wherein the whey protein composition is a micronized whey protein composition.

4. The whey protein composition according to claim 3, wherein the micronization is carried out under high temperature and high speed shearing at a pH value of 6.5-9.0.

5. The whey protein composition according to any one of claims 1-4, further comprising a polysaccharide.

6. The whey protein composition according to claim 5, wherein the polysaccharide is selected from the group consisting of carrageenan, alginate, chitosan, carboxymethyl cellulose, tragacanth gum and a mixture thereof.

7. A method for preparing a whey protein composition, comprising processing skimmed raw milk at a low temperature of 0-10°C, then performing filtration with a membrane not less than 20-200 nm, and concentrating the permeate by ultrafiltration to remove lactose, to obtain a whey protein composition containing whey protein and β-casein.

8. The method according to claim 7, further comprising micronizing the whey protein composition.

9. The method according to claim 8, wherein the micronization is carried out under high temperature and high speed shearing at a pH value of 6.5-9.0.

10. The method according to any one of claims 7-9, further comprising adding a polysaccharide.

11. The method according to claim 10, wherein the polysaccharide is selected from the group consisting of carrageenan, alginate, chitosan, carboxymethyl cellulose, tragacanth gum and a mixture thereof.

12. A whey protein composition prepared by the method according to any one of claims 7-11.

13. Use of the whey protein composition according to any one of claims 1-6 or the whey protein composition according to claim 12 in the manufacture of a nutritional supplement, a muscle synthesis promoter or a dairy product.

14. Use of the whey protein composition according to any one of claims 1-6 or the whey protein composition according to claim 12 in the manufacture of a whey protein product with slow digestion and/or slow release of amino acids.

15. A nutritional supplement, a muscle synthesis promoter or a dairy product, comprising the whey protein composition according to any one of claims 1-6 or the whey protein composition according to claim 12, and excipients and/or nutrients that can be added to food.

16. The nutritional supplement, muscle synthesis promoter or dairy product according to claim 15, which is a nutritional bar comprising the whey protein composition according to any one of claims 1-6 or the whey protein composition according to claim 12, and glucose syrup, glycerin, maltodextrin, coconut oil and lecithin.

17. The nutritional supplement, muscle synthesis promoter or dairy product according to claim 15, which is a powdered dairy product comprising the whey protein composition according to any one of claims 1-6 or the whey protein composition according to claim 12, and lactose, fructose, glucose, cream, vitamins, minerals and lecithin.
